# EUROPEAN PATENT APPLICATION

(11) **EP 1 235 024 A1**
(43) Date of publication of application: **28.08.2002**
(21) Application number: 01301663.9
(22) Date of filing: 23.02.2001
(51) Int. Cl.: F16L 59/14

(54) **Coupling for cryogenic fluid**

(71) Applicant: SPEMBLY MEDICAL LIMITED, Andover, Hampshire SP10 4DR (GB)
(72) Inventor: Clark, Brian, Cryomedical Instruments Ltd., Nottinghamshire NG19 8BW (GB); Copping, Gareth, Woking, Surrey GU21 1PJ (GB)
(74) Representative: Price, Paul Anthony King

(57) **Abstract**

A coupling for coupling a cryosurgical instrument to a control console is described. The coupling comprises a male coupling part (10) securable to a female coupling part (12). The female coupling part includes a sealing member in the form of a socket body (60), which is made of a material (e.g. PTFE) which, when cooled, shrinks more rapidly than the male coupling part. The sealing member therefore shrinks down to form a tight seal against the male coupling part. If any cryogenic fluid should leak, then the additional cooling at that point will cause further shrinkage, thereby compensating for the leak.

## Description

This invention relates to a coupling for cryogenic fluid, and to components therefor. The invention is especially suitable for use in the form of a releasable coupling or connector, but it is not limited exclusively to this.

The invention is also especially suitable for use in the field of cryosurgery (for example, to connect a supply of cryogenic refrigerant to a cryosurgical instrument). However, the invention is not limited only to cryosurgical apparatus, and may find application in any arrangement for handling fluid at cryogenic temperatures.

Cryogenic couplings have to be designed to cope with extremely low temperatures, and to achieve a reliable seal between the coupling parts at such low temperatures. For example, where the cryogenic fluid is liquid nitrogen, the temperature is about -196°C. A typical coupling consists of a male body and a female body made of the same material, for example, stainless steel. The use of the same material for both bodies ensures that the bodies retain dimensional stability with reference to each other, even at extremely low operating temperatures. Rubber O-rings, or washers, provide one or more seals between the male and female coupling parts to prevent leakage of the cryogenic fluid.

In order to ensure reliability, the male and female parts have to be manufactured to high tolerances. The tolerances, and the arrangement of the rubber seals, become even more important where the coupling provides multi conduit paths (i.e. the coupling is a multichannel coupling). For example, for a cryosurgical instrument, a single coupling might typically provide both an inlet path for delivering cryogen to the cryosurgical instrument and an exhaust path for exhausting spent fluid returning from the instrument. The coupling might possibly include a third bypass path to enable fluid to bypass the instrument tip. With such multi-conduit couplings, it is important that there be no leakage of fluid between the inlet and exhaust paths.

The intricate design of cryogenic couplings (especially multi-conduit couplings) makes such couplings very expensive, and also prone to leakage. The present invention has been devised bearing the above problems in mind.

Broadly speaking, in contrast to the prior art in which the same materials are used for the male and female parts of the coupling, one aspect of the present invention is to employ in a coupling socket a member comprising a material which, when cooled, shrinks at a rate faster than any shrinkage of the male coupling part received within the socket. The member is configured to shrink against or around the male part to form a seal therewith.

In other words, it has been appreciated that the difference in the rates of thermal contraction can be used to provide a seal effect by shrinking at least a seal portion of the female part onto the male coupling part, when the coupling is subjected to the cold temperature of a cryogenic fluid flowing therein. Such an effect is referred to herein as a shrink-down seal.

Such an arrangement can avoid many of the problems of the prior art regarding manufacturing tolerances, and seal complexity. The socket can be self sealing by shrinking down on to the male part regardless of the precise size of the male part.

In a preferred embodiment, the female part comprises a body defining the coupling socket, the body being made of the temperature shrinkable material. Such a socket can provide an excellent seal around the male coupling part along the entire length of the socket.

Preferably, the shrink-down material is, or comprises, plastics.

Preferably, the shrink-down material is, or comprises, a material which is at least partly flowable, so that it is able to mould around the male part received within the socket, and hence further increase the seal effect.

In a particularly preferred embodiment, the shrink-down material is, or includes, polytetraflouroethylene (PTFE).

Preferably, the shrink-down material is partly, or wholly, of closed loop form. This can provide an optimum seal created by temperature responsive shrinkage of the material.

When the material is allowed to warm up again, the parts expand differentially and the shrink seal will be broken so that the male part may be disconnected from the female part.

In a closely related second aspect, the invention provides the use of a temperature-responsive seal effect, whereby escape of cryogenic fluid past the seal causes the seal to shrink, and to close the gap to be sealed.

Such an arrangement provides a self-compensating seal. Should any leakage of cryogenic fluid occur, then the fluid escaping past, or around, the seal cools the seal causing temperature responsive shrinkage. Such a seal may be useful between the male and female parts of a coupling, or between conduits or valves attached to one of the coupling parts.

An embodiment of the invention is now described by way of example only, with reference to the accompanying drawings, in which:
Fig. 1 is a schematic side section of a male coupling part of a cryogenic coupling;
Fig. 2 is a schematic end view of the plastics body portion of a cryogenic socket;
Fig. 3 is a schematic side section showing the socket along the line III-III of Fig. 2;
Fig. 4 is a schematic side section showing the socket along the line IV-IV of Fig. 2;
Fig. 5 is a schematic side section showing the socket and the male coupling part when fitted together; and
Fig. 6 is an enlarged schematic side section showing a detail of Fig. 5.

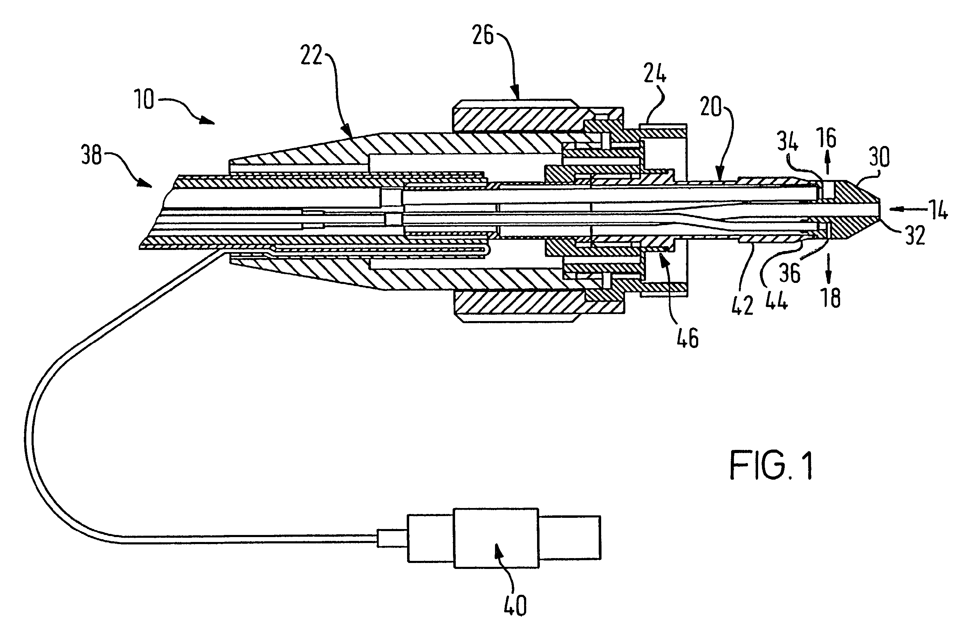

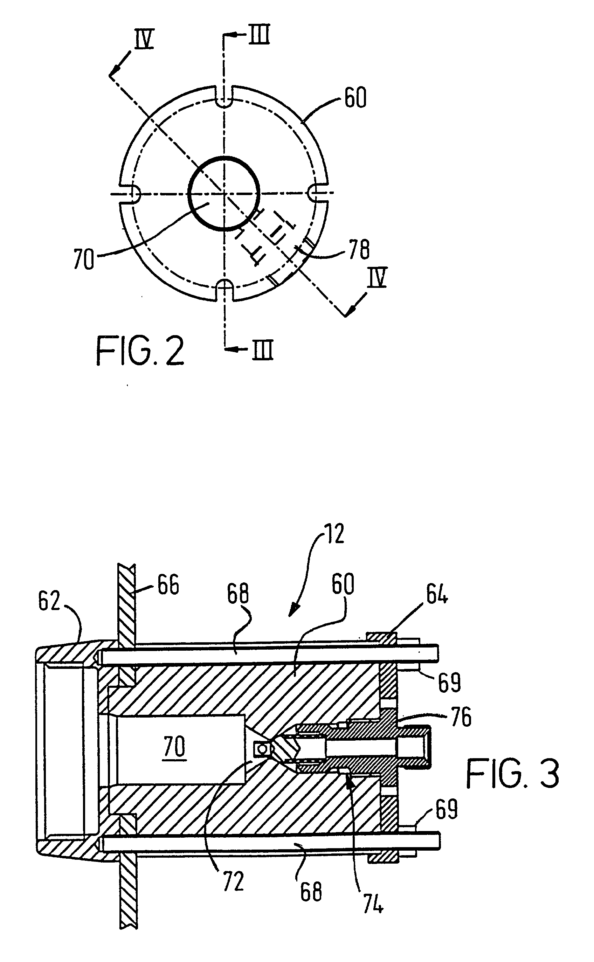

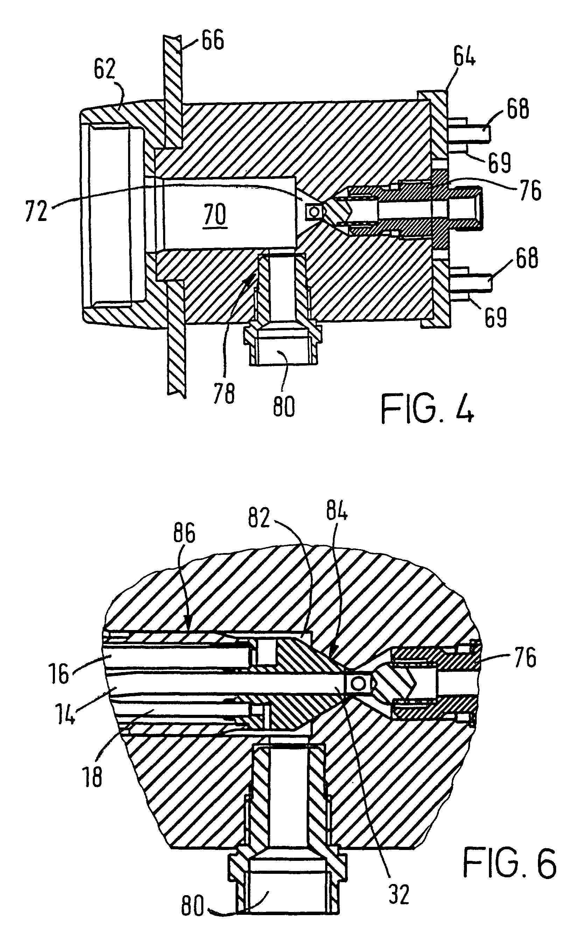

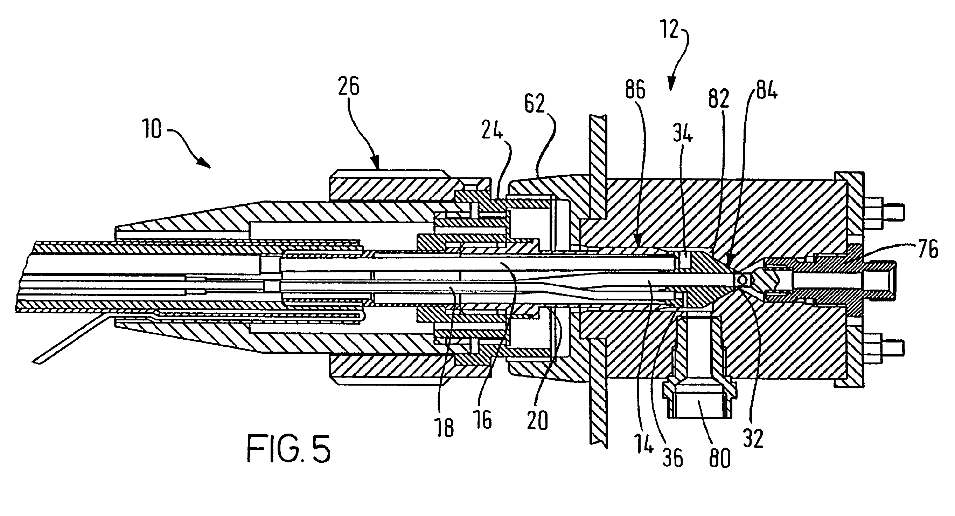

The drawings show parts of a cryogenic fluid coupling, which consists generally of a male coupling part 10 (Figs. 1 and 5) releasably securable to a female coupling part 12 (Figs. 2-5). The coupling is designed to be used to couple a cryosurgical instrument (not shown) to a supply console (not shown). In this embodiment, the female coupling part 12 is mounted on the console, and the male coupling part 10 is attached to a hose leading to the cryosurgical instrument. The coupling includes a first conduit path 14 through which liquid cryogen (e.g. liquid nitrogen) is supplied to the instrument, a second conduit path 16 through which spent or exhaust cryogen is returned to the console, and a third conduit path 18 through which vent, or bypass, fluid is returned from the instrument.

In the coupling, the second (exhaust) path 16 and the third (bypass) path 18 are interconnected. However, it is essential that the second and third paths are kept independent from the first (supply) path 14, and that any leaks to or from the first path 14 are rapidly sealed.

Referring to Fig. 1, the male coupling part 10 comprises a hollow connector-spigot 20 which houses the fluid conduits for the first, second and third fluid paths 14-18. The spigot carries a rear shroud 22, a rotatable coupling fastening nut 24 and a rotatable handle 26 coupled to the nut 24 to enable the nut to be tightened manually.

The spigot 20 is of stainless steel, and carries a tapered nose cap 30 also of stainless steel. The nose cap 30 has an axial central first aperture 32 defining the first (supply) fluid path 14, and diametrically opposite side apertures 34 and 36 defining the second (exhaust) and third (bypass) fluid paths 16 and 18. Metal conduits extend rearwardly from the nose cap to couple the fluid paths to respective tubes of the hose (depicted generally at 38) extending out of the shroud 22. The hose 38 is of a known construction and need not be described in detail. The hose may include one or more wires coupled to a thermocouple in the cryosurgical instrument; if provided, the wires will normally be routed to a dedicated electrical connector (depicted schematically at 40), although the electrical connector need not be independent of the coupling in all embodiments.

In a region adjacent to the nose cap 30, the spigot 20 has a generally cylindrical thickening or bulge 42. This is dimensioned to be an approximate close fit within the socket of the female part 12. The leading edge of the bulge 42 has a lead-in taper surface 44 to aid insertion of the spigot into the female part 12.

As mentioned above, the fastening nut 24 and handle 26 are rotatably carried on the spigot 20. The nut 24 is held in position by a slip-ring 46 captive on the spigot 20. In use, the nut 24 engages with a complementary thread of the female part 12 to secure the male and female parts together.

Referring to Figs. 2 to 4, the female part 12 consists of a generally round, moulded body 60 of PTFE (or of some other shrink-down material responsive to temperature). The body 60 is sandwiched between a front bezel 62 and a rear plate 64. The front bezel 62 sits outside the front wall 66 of the console, to provide a threaded coupling to be engaged by the fastening nut 24 of the male part 10. The front bezel 62, the body 60 and the rear plate 64 are fastened together by means of long studs 68 and nuts 69. The studs 68 are threadedly engaged in the front bezel 64 and pass through elongate channels or recesses in the body 60.

The body 60 defines a socket recess 70 having a generally cylindrical wall, and a tapered end 72. The tapered end 72 communicates axially with a bore 74 in which a self-closing valve 76 is threadedly secured. The valve has a plunger or actuator which projects into tapered end 72 of the socket recess 70, to co-operate with the tip of the spigot 20 when the male coupling part 10 is inserted into the socket, to open the valve 76, and allow the flow of cryogenic fluid. When the spigot 20 is removed, the valve 76 closes to automatically shut off the supply of cryogenic fluid, and hence prevents cryogenic fluid leaking out through the exposed socket.

A radial bore 78 communicates with the socket recess 70 at a location close to, but distinct from, the tapered end 72 of the socket recess 70. A threaded connector tube 80 is threadedly secured within the radial bore 78 to provide a connector for an exhaust conduit (not shown).

Referring to Figs. 5 and 6, to assemble the male and female coupling parts 10 and 12, the spigot 20 of the male part 10 is advanced into the socket recess 70 of the female part 12. When the spigot 10 is advanced sufficiently, the fastening nut 24 can begin to engage the bezel 62. Thereafter, the handle 26 can be rotated to tighten the nut 24 within the bezel 62, and hence draw the spigot 20 tightly into the socket recess 70, until it reaches the fully inserted position shown in Figs. 5 and 6.

In the fully inserted position, the valve 76 opens to allow cryogenic fluid to be supplied through the valve 76, and to flow through the central first aperture 32 of the spigot nose cap 30, and through the first (supply) flow path 14 to the cryosurgical instrument. Spent fluid returns from the cryosurgical instrument through the second (exhaust) flow path 16, and emerges through the exhaust aperture 34. Similarly, any "bypass" fluid returns from the cryosurgical instrument through the third (bypass) flow path 18, and emerges through the bypass aperture 36. As can be seen in Figs. 5 and 6, there is a generally annular clearance 82 around the spigot 20 in the region of the exhaust and bypass apertures 34 and 36, and communicating with the connector tube 80 secured in the radial bore 78. This provides a flow path for both the bypass fluid and the exhaust fluid through the connector tube 80, and connects together the bypass and exhaust paths to form a single "exit" flow path.

Referring to Fig. 6, there are two seal regions between the spigot 20 and the socket recess 70. The first seal region 84 is at the tapered end 72 of the socket where the tapered nose of the spigot bears against the tapered end surface. The confronting surfaces are under longitudinal compression, which results from the nut 24 being tightened against the bezel 62. The first seal region separates the fluid supply path 14 from the combined fluid exhaust and bypass paths 16 and 18.

The second seal region 86 is formed between the cylindrical bulge 42 and inner surface of the socket recess 70. The second seal 86 prevents the fluid returning in the exhaust and bypass paths 16 and 18 from leaking from the mouth of the coupling. Generally the second seal 86 is less critical than the first seal 84, although it is nevertheless desirable that the second seal should be fully effective in preventing leaks.

In accordance with the principles of this invention, the sealing effects are enhanced by the choice of the material for the body 60, namely having a shrink-down characteristic (in other words, the plastics body 60 shrinks more rapidly than does the stainless steel spigot 20 when subjected to cold temperatures). As the cryogenic fluid passes through the coupling parts 10 and 12, the parts are subjected to extremely low temperatures, which causes the body 60 to shrink around the spigot 20, and hence increases the sealing pressure around the spigot. Both of the seals 84 and 86 benefit from circumferential contraction of the body 60, but the first seal 84 also benefits from longitudinal contraction of the body 60.

Where a leak does occur (particularly during the initial cool-down period of the coupling), the leak tends to be self sealing, or self compensating. The leaking cold cryogenic fluid further cools the plastics body 60 at the point of the leak (and along the leak path). This direct cooling at the point of the leak accelerates the shrinkage of the plastics at that point, leading to a more rapid, or stronger, seal to compensate for the leak.

In use, the body 60 of the female coupling part 12 will tend to grip the spigot so tightly that it is impossible (or at least very difficult) to withdraw the spigot while the coupling is still cold. However, after use, once the coupling has warmed to room temperature, the body 60 expands and relaxes the grip on the spigot 20, enabling it to be removed to separate the coupling parts 10 and 12.

It will be appreciated that the invention, particularly as illustrated in the preferred embodiment, can provide an improved coupling for cryogenic fluid, having an improved seal characteristic, and requiring a less complicated construction than many existing cryogenic couplings.

It will further be appreciated that many modifications may be made within the scope of the invention.

## Claims

1. A coupling for cryogenic fluid, the coupling comprising:
a male coupling part; and
a female coupling part in which the male coupling part may be at least partly received, the female coupling part comprising a material which, when cooled,
shrinks at a rate faster than the shrinkage of the male coupling part, to form a shrink seal against the male coupling part.

2. A coupling according to claim 1, wherein said material is a plastics material.

3. A coupling according to claim 2, wherein said material is PTFE

4. A coupling according to claim 1, wherein said material is at least partly flowable to flow at least partly around the male coupling part during shrinkage.

5. A coupling according to any preceding claim, wherein the female coupling part comprises a body defining a socket recess for the male coupling part, said body being of said shrinkable material.

6. A coupling according to claim 1, wherein said material is arranged, when no longer cooled, to relax to its original shape to break the shrink seal.

7. A coupling according to any preceding claim, wherein the male coupling part comprises a first conduit channel and a second conduit channel, and the female coupling part comprises respective conduit channels to communicate with the first and second conduit channels of the male coupling part, and wherein said material is arranged to form a seal between the flow paths for the first and second channels, to obstruct fluid in one channel from leaking into the other channel.

8. A coupling according to any preceding claim, wherein the male coupling part comprises a spigot of metal.

9. A coupling according to claim 8, wherein the spigot is of stainless steel.

10. A coupling according to any preceding claim, wherein the material is arranged to form a seal which shrinks at least partly in a radial direction.

11. A coupling according to any preceding claim, wherein the material is arranged to form a seal which shrinks at least partly in an axial direction.

12. A female coupling part for cryogenic fluid, the female coupling part being for use to co-operate with a male coupling part, the female coupling part comprising a sealing member which, when exposed to cryogenic temperatures, shrinks to form a seal against the male connector part.

13. A female coupling part according to claim 12, wherein the sealing member is of plastics.

14. A female coupling part according to claim 13, wherein the sealing member is of PTFE.

15. A female coupling part according to any one of claims 12 to 14, wherein the sealing member is in the form of a body defining a socket recess therein.

16. A female coupling part according to claim 15, comprising a first fluid conduit channel communicating with the socket recess, and a second fluid conduit channel distinct from the first channel and communicating with the socket recess.
